# EUROPÄISCHE PATENTANMELDUNG

(11) **EP 1 396 362 A1**
(43) Veröffentlichungstag der Anmeldung: **10.03.2004**
(21) Anmeldenummer: 02019965.9
(22) Anmeldetag: 05.09.2002
(51) Int. Cl.: B60H 1/32, F25B 41/06

(54) **Klimaanlage für ein Kraftfahrzeug**

(71) Anmelder: Ford Global Technologies, Inc., A subsidiary of Ford Motor Company, Dearborn, Michigan 48126 (US)
(72) Erfinder: Knoche, Volker, 40789 Monheim (DE)
(74) Vertreter: Drömer, Hans-Carsten, Dipl.-Ing.

(57) **Zusammenfassung**

Die Erfindung betrifft eine Klimaanlage für ein Kraftfahrzeug mit einem Kältemittelkreislauf, in dem sich der Reihe nach ein Kompressor (5), ein Kondensator (1), ein Expansionsventil (2) und ein Verdampfer (4) befinden. Dabei wird durch Anordnung des Expansionsventils (2) in der Nähe des Kondensators (1) erreicht, daß die flüssiges Kältemittel enthaltende Verbindungsleitung (3a) zwischen Kondensator (1) und Expansionsventil (2) kürzer ist als die gasförmiges Kältemittel enthaltende Verbindungsleitung (3b) zwischen Expansionsventil (2) und Verdampfer (4). Die zuletzt genannte Leitung (3b) kann daher leichter ausgelegt werden, und die Klimaanlage benötigt weniger Kältemittel.

## Beschreibung

Die Erfindung betrifft eine Klimaanlage für ein Kraftfahrzeug, enthaltend einen Kältemittelkreislauf, in welchem der Reihe nach angeordnet sind:
a) ein Kompressor zur Verdichtung eines gasförmigen Kältemittels,
b) ein Kondensator zur Kondensation verdichteten Kältemittels,
c) ein Expansionsventil zur Kontrolle der Expansion kondensierten, verdichteten Kältemittels, und
d) ein vom Kondensator entfernt angeordneter Verdampfer, in welchem Kältemittel unter Wärmeaufnahme verdampfen kann.

Klimaanlagen werden in Kraftfahrzeugen benötigt, um dem Fahrgastraum (Frisch-) Luft zuzuführen, die in der Regel zuvor gereinigt und ent- oder befeuchtet wird. Ferner haben Klimaanlagen die wichtige Aufgabe, die zugeführte Luft auf bestimmte Temperaturen einzustellen. Zur Abkühlung der Luft weisen Klimaanlagen dabei einen Kältemittelkreislauf auf, in welchem ein Kältemittel im Kreis umgepumpt wird. Das Kältemittel nimmt in einem Verdampfer bei einem Phasenwechsel von flüssig nach gasförmig Wärme auf und gibt diese bei einem umgekehrten Phasenwechsel im Kondensator wieder ab.

Während der Kondensator sich im vorderen Frontbereich des Kraftfahrzeuges befindet, wo er für die kühlende Umgebungsluft gut zugänglich ist, ist der Verdampfer in der Nähe der Fahrgastzelle angeordnet. Zwischen beiden Einrichtungen liegt daher eine Entfernung von etwa dem Ausmaß des Motorblocks. Diese Distanz wird durch eine vom Kondensator zum Verdampfer führende Kältemittelleitung überwunden, an deren Ende, d.h. in unmittelbarer Nähe des Verdampfers, bei den bekannten Klimaanlagen ein Expansionsventil angeordnet ist. Das Expansionsventil erlaubt die Kontrolle der Expansionsrate des Kältemittels im Verdampfer und damit auch die Kontrolle der Kühlrate der Klimaanlage.

Vor diesem Hintergrund war es Aufgabe der vorliegenden Erfindung, eine Klimaanlage für ein Kraftfahrzeug bereitzustellen, welche sich einfacher und damit kostengünstiger herstellen läßt.

Diese Aufgabe wird durch eine Klimaanlage mit den Merkmalen des Anspruchs 1 gelöst.

Vorteilhafte Ausgestaltungen sind in den Unteransprüchen enthalten.

Die erfindungsgemäße Klimaanlage für ein Kraftfahrzeug enthält einen Kältemittelkreislauf, in welchem in Strömungsrichtung des Kältemittels gesehen der Reihe nach ein Kompressor, ein Kondensator, ein Expansionsventil sowie ein Verdampfer angeordnet sind, wobei sich der Kondensator in einigem räumlichem Abstand vom Verdampfer befindet. Die Klimaanlage ist dadurch gekennzeichnet, daß das Expansionsventil näher am Kondensator als am Verdampfer angeordnet ist. D.h., daß mehr als die Hälfte der Länge der Leitung, die den Kondensator mit dem Verdampfer verbindet, zwischen dem Expansionsventil und dem Verdampfer und der Rest dieser Leitung zwischen dem Kondensator und dem Expansionsventil liegt.

Da bei Betrieb der Klimaanlage im Expansionsventil das unter hohem Druck stehende Kältemittel vom flüssigen Zustand in einen gasförmigen Zustand expandiert, muß in der Leitung vom Kondensator zum Expansionsventit flüssiges Kältemittel hoher Dichte und mit hohem Druck und in der Leitung vom Expansionsventil zum Verdampfer gasförmiges oder zweiphasiges Kältemittel geringerer Dichte und geringeren Drucks gefördert werden. Die Füllung der zuletzt genannten, zwischen Expansionsventil und Verdampfer liegenden Leitung ist daher aufgrund des gasförmigen Inhalts entsprechend leichter. Zudem kann die genannte Leitung konstruktiv leichter ausgelegt werden. Beide Effekte tragen zu einer Gewichtsreduktion der Klimaanlage bei, wodurch sich deren Herstellungskosten senken lassen.

Bei einer bevorzugten Ausgestaltung der Klimaanlage ist das Expansionsventil unmittelbar am Kondensator angeordnet, so daß im Wesentlichen die gesamte Länge der Verbindungsleitung zwischen Kondensator und Verdampfer stromabwärts des Expansionsventils liegt und daher entsprechend leichter befüllt ist und ausgelegt sein kann. Insbesondere kann das Expansionsventil auch in den Kondensator baulich integriert werden. Hierdurch lassen sich weitere Herstellungskosten einsparen.

Des Weiteren kann die das Expansionsventil und den Verdampfer verbindende Leitung einen geringeren Leitungsquerschnitt aufweisen als die den Kondensator und das Expansionsventil verbindende Leitung. Wie bereits erläutert, findet vor dem Expansionsventil ein Transport flüssigen Kältemittels und hinter dem Expansionsventil ein Transport gasförmigen oder gemischt gasförmig-flüssigen Kältemittels statt. Aufgrund des unterschiedlichen Strömungsverhaltens können daher die beiden Leitungen bei gleichen Massenflußraten des Kältemittels mit unterschiedlichen Leitungsquerschnitten (d.h. bei zylindrischen Leitungen mit unterschiedlichen Innendurchmessern) ausgelegt werden. Der geringere Durchmesser der langen Verbindungsleitung zwischen Expansionsventil und Verdampfer führt dabei zu einer weiteren Kostenreduktion der Anlage.

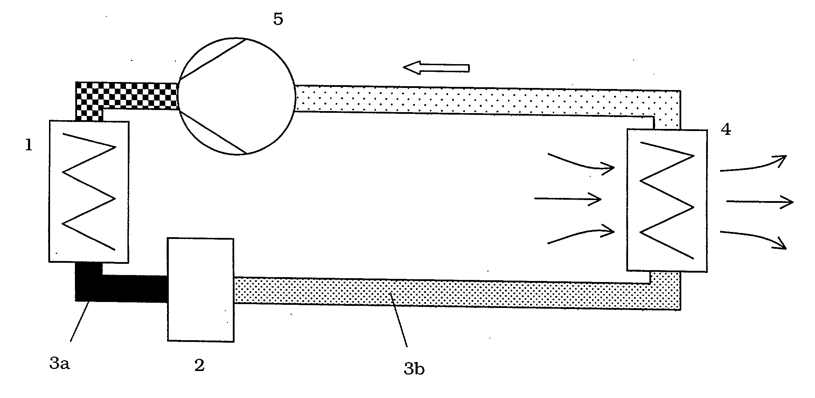

Im Folgenden wird die Erfindung mit Hilfe der Figur beispielhaft näher erläutert.

Die einzige Figur zeigt schematisch den Aufbau einer erfindungsgemäßen Klimaanlage für ein Kraftfahrzeug.

Der in der Figur erkennbare Kältemittelkreislauf einer Klimaanlage enthält im Wesentlichen vier Komponenten. Hierbei handelt es sich in Strömungsrichtung des Kältemittels (Blockpfeil) gesehen um einen Kompressor 5, einen Kondensator 1, ein Expansionsventil 2 sowie einen in der Nähe der Fahrgastzelle angeordneten Verdampfer 4, wobei die genannten Komponenten untereinander durch Leitungen verbunden sind.

Im Kompressor 5 wird das vor dem Kompressor gasförmig bei einem niedrigen Druck von typischerweise 2 bar vorliegende Kältemittel (zum Beispiel R134a) auf einen hohen Druck von typischerweise 16 bar verdichtet und zum Kondensator 1 geleitet.

Im Kondensator 1 findet ein Wärmeaustausch des Kältemittels mit der Umgebungsluft statt, wodurch sich das Kältemittel abkühlt und in den flüssigen Zustand kondensiert. Der Kondensator ist im vordersten Frontbereich im "Kühler" des Fahrzeugs angeordnet, so daß dieser gut von der Umgebungsluft erreicht bzw. umströmt werden kann.

Das kondensierte, unter hohem Druck stehende Kältemittel gelangt als nächstes über eine Flüssigkeitsleitung 3a zu einem Expansionsventil 2, das von einer Steuerung (nicht dargestellt) geregelt wird. Beim Durchtritt durch das Expansionsventil 2 kann sich das Kältemittel ausgehend von einem hohen Druck auf einen niedrigen Druck entspannen und hierbei ausdehnen. Dem Verdampfer 4 wird daher über die zwischen Expansionsventil 2 und Verdampfer 4 gelegene Gemischleitung 3b ein gasförmiges beziehungsweise zweiphasig (flüssig/gasförmig) gemischtes Kältemittel zugeführt.

Im Verdampfer 4 nimmt das in den gasförmigen Zustand übergehende Kältemittel aus der dem Fahrgastraum zuzuführenden Luft Wärme auf, so daß Letztere abgekühlt wird. Das erwärmte, gasförmige und bei niedrigem Druck vorliegende Kältemittel wird dann vom Verdampfer 4 wieder zum Kompressor 5 geführt, wo sich der beschriebene Kreislauf schließt.

Da sich der Kondensator 1 im vorderen Bereich und der Verdampfer 4 im hinteren Bereich des Motorraums befindet, liegt zwischen beiden Einrichtungen ein erheblicher Abstand, der durch entsprechend lange Leitungen zu überwinden ist. Diese erreichen typischerweise eine Länge von 1 bis 2 m. Bei bekannten Klimaanlagen ist weiterhin das Expansionsventil 2 möglichst nahe beim Verdampfer 4 angeordnet, so daß beim Stand der Technik - anders als in der Figur dargestellt - die Flüssigkeitsleitung 3a vom Kondensator 1 zum Expansionsventil 2 sehr lang und die Gemischleitung 3b vom Expansionsventil 2 zum Verdampfer 4 sehr kurz ist.

Im Unterschied hierzu wird erfindungsgemäß das Expansionsventil in möglichst großer Nähe zum Kondensator 1 angeordnet. Die flüssiges Kältemittel unter hohem Druck enthaltende Flüssigkeitsleitung 3a ist daher kurz im Vergleich zur gasförmiges Kältemittel bei geringem Druck enthaltenden Gemischleitung 3b. Insbesondere kann das Expansionsventil 2 auch ausgangsseitig in den Kondensator 1 integriert werden, so daß die Flüssigkeitsleitung 3a ganz entfällt.

Der in der Gemischleitung 3b zwischen Expansionsventil 2 und Verdampfer 4 stattfindende Kältemittelfluß besteht in der Regel aus zwei Phasen (flüssig/gasförmig), so daß die Füllung der Leitung aufgrund der geringen Gasdichte insgesamt ein geringes Gewicht aufweist. Ferner besitzt die Gemischleitung 3b einen geringeren Durchmesser als die entsprechende Flüssigkeitsleitung 3a, wodurch sich das Gewicht der Klimaanlage und damit deren Kosten verringern. Der geringe Durchmesser der Gemischleitung 3b sowie deren (teilweise) Füllung mit gasförmigem Kältemittel haben ferner zur Folge, daß im Kältemittelkreislauf insgesamt weniger Kältemittel vorzusehen ist, wodurch das Gesamtgewicht der Anlage zusätzlich abnimmt. Erfindungsgemäß tragen somit mehrere Effekte in Kombination zu einer Gewichts- und Kostenreduktion der Klimaanlage bei.

## Patentansprüche

1. Klimaanlage für ein Kraftfahrzeug, enthaltend einen Kältemittelkreislauf, in welchem der Reihe nach
a) ein Kompressor (5) zur Verdichtung eines gasförmigen Kältemittels,
b) ein Kondensator (1) zur Kondensation verdichteten Kältemittels,
c) ein Expansionsventil (2) zur Kontrolle der Expansion kondensierten, verdichteten Kältemittels, und
d) ein vom Kondensator entfernt angeordneter Verdampfer (4), in welchem Kältemittel unter Wärmeaufnahme verdampfen kann,
vorgesehen sind,
**dadurch gekennzeichnet, daß**
das Expansionsventil (2) näher am Kondensator (1) als am Verdampfer (4) angeordnet ist.

2. Klimaanlage nach Anspruch 1,
**dadurch gekennzeichnet, daß**
das Expansionsventil (2) unmittelbar am Kondensator (1) angeordnet oder ausgangsseitig in den Kondensator (1 ) integriert ist.

3. Klimaanlage nach Anspruch 1 oder 2,
**dadurch gekennzeichnet, daß**
die das Expansionsventil (2) und den Verdampfer (4) verbindende Leitung (3b) einen geringeren Leitungsquerschnitt aufweist als die den Kondensator (1) und das Expansionsventil (2) verbindende Leitung (3a).
